(19) **Europäisches Patentamt**
**European Patent Office**
**Office européen des brevets**

(11) **EP 1 875 470 B1**

(12) **EUROPEAN PATENT SPECIFICATION**

(45) Date of publication and mention of the grant of the patent:
**01.07.2009 Bulletin 2009/27**

(51) Int Cl.:
*G11B 20/00* $^{(2006.01)}$    *H04N 1/32* $^{(2006.01)}$
*G06T 1/00* $^{(2006.01)}$

(21) Application number: **06727897.8**

(22) Date of filing: **12.04.2006**

(86) International application number:
**PCT/IB2006/051126**

(87) International publication number:
**WO 2006/109259 (19.10.2006 Gazette 2006/42)**

(54) **Modified DCT transform to phase modulate an MP3 data bitstream in baseband, and watermarking.**

Modifizierte DCT Transformation zur Basisband-Phasenmodulation von einem MP3 Bitstream, und Einfügung von Wasserzeichen.

transformée DCT modifiée pour modulation de phase en bande de base d'un flux de données MP3, et filigranage.

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.04.2005 EP 05102889**

(43) Date of publication of application:
**09.01.2008 Bulletin 2008/02**

(73) Proprietor: **Koninklijke Philips Electronics N.V.**
**5621 BA Eindhoven (NL)**

(72) Inventors:
• **VAN DER VEEN, Minne**
**NL-5656 AA Eindhoven (NL)**
• **LEMMA, Aweke, N.**
**NL-5656 AA Eindhoven (NL)**
• **BEAUGET, Sylvain, P.**
**NL-5656 AA Eindhoven (NL)**

(74) Representative: **Schouten, Marcus Maria**
**Philips**
**Intellectual Property & Standards**
**P.O. Box 220**
**5600 AE Eindhoven (NL)**

(56) References cited:
**WO-A-20/04107316**    **US-A- 6 145 081**

• **PATENT ABSTRACTS OF JAPAN vol. 2003, no. 12, 5 December 2003 (2003-12-05) & JP 2004 279469 A (UNIV TOHOKU), 7 October 2004 (2004-10-07)**
• **ALTURKI F ET AL: "Robust oblivious digital watermarking using image transform phase modulation" IMAGE PROCESSING, 2000. PROCEEDINGS. 2000 INTERNATIONAL CONFERENCE ON SEPTEMBER 10-13, 2000, PISCATAWAY, NJ, USA,IEEE, vol. 2, 10 September 2000 (2000-09-10), pages 84-87, XP010529929 ISBN: 0-7803-6297-7**
• **TAKAHASHI A ET AL: "MULTIPLE WATERMARKS FOR STEREO AUDIO SIGNALS USING PHASE-MODULATION TECHNIQUES" IEEE TRANSACTIONS ON SIGNAL PROCESSING, IEEE SERVICE CENTER, NEW YORK, NY, US, vol. 53, no. 2, PART 2, February 2005 (2005-02), pages 806-815, XP001223150 ISSN: 1053-587X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method and apparatus for decoding an encoded signal, to generate a decoded phase modulated signal. The invention also relates to a method for encoding a signal.

It is well known that it is desirable to limit a user's ability to make copies of digital data stored on digital media. This is particularly true of data representing music or video content which is protected by copyright laws. Copyright owners are keen to limit a user's ability to make copies of such content so as to protect revenues from legitimate sales.

One known method for controlling a user's ability to make copies of digital data such as that described above is to use digital watermarks. A digital watermark is embedded within digital data provided to a user, and is ordinarily invisible to the user. The watermark can however be detected by software configured to present the data to the user, and can thus be used to limit access to the data in various ways. Additionally, digital watermarks can be used as a means to prevent unauthorised copying.

Recently, some users have tried to remove watermarks from digital data so as to generate data which can be freely accessed and copied. Such removal of digital watermarks is clearly undesirable.

One known method for removing watermarks from digital signals is referred to as a "collusion attack". Here, a user seeks to combine a plurality of signals including watermarks in an attempt to remove the watermarks. These signals can either comprise different source signals (e.g. different films) bearing the same watermark, or the same signal (e.g. the same film) bearing different watermarks (perhaps for different users). The collusion attack using two or more identical source signals with different watermarks operates by averaging the two or more signals to remove (or at least reduce) the watermark in the averaged signal.

Various methods are known for hindering a collusion attack operating on identical source signals having different watermarks. One such method is described in US 6,145,081 (Winograd et al). Here, before embedding a watermark, the source signal is phase modulated using appropriate parameters. The parameters are selected such that the phase modulated signal is, in use, indistinguishable from the source signal. By using a plurality of different sets of parameters, a plurality of different phase modulated signals can be generated using a single source signal. The parameters are additionally selected such that phase cancellation and undesirable artefacts are generated when the averaging involved in a collusion attack of the type described above is carried out using differently phase modulated signals. This renders the obtained signal useless.

Although the method described in US 6,145,081 effectively hinders a collusion attack, it is appropriate only for application to base band source signals. It cannot be applied directly for example to a bitstream signal, such as the many encoded signals which are currently in widespread use, such as MP3 audio, and AAC audio.

Document XP1 05299929, "Robust Digital Watermarking using image transform phase modulation", Alturki, F., IEEE, 2000, defines a phase modification of the coefficients in the transform domain leading to a phase modulation of the baseband signal.

The scope of the invention is defined by the appended claims.

The method set out above maybe used in combination with methods described in published international patent application WO2004/107316. That is, the decoder may generate intermediate data which is passed directly to an encoder in order to encode the signal with greater efficiency.

Embodiments of the present invention will now be described, by way of example, with reference to the accompanying drawings, in which:

Fig. 1 is a schematic illustration of a prior art apparatus for embedding a watermark in a signal;
Fig. 2 is a schematic illustration of an apparatus for embedding a watermark in a signal in accordance with the present invention;
Fig. 3 is a schematic illustration of the apparatus of figure 2 in further detail;
Fig. 4 is a schematic illustration showing how frames of processed data are combined;
Fig. 5 is a schematic illustration of an alternative embodiment of the present invention;
Fig. 6 is a schematic illustration showing an alternative implementation of the apparatus of Figure 2; and
Fig. 7 is a schematic illustration of an alternative embodiment of the present invention based upon that illustrated in Figure 5.

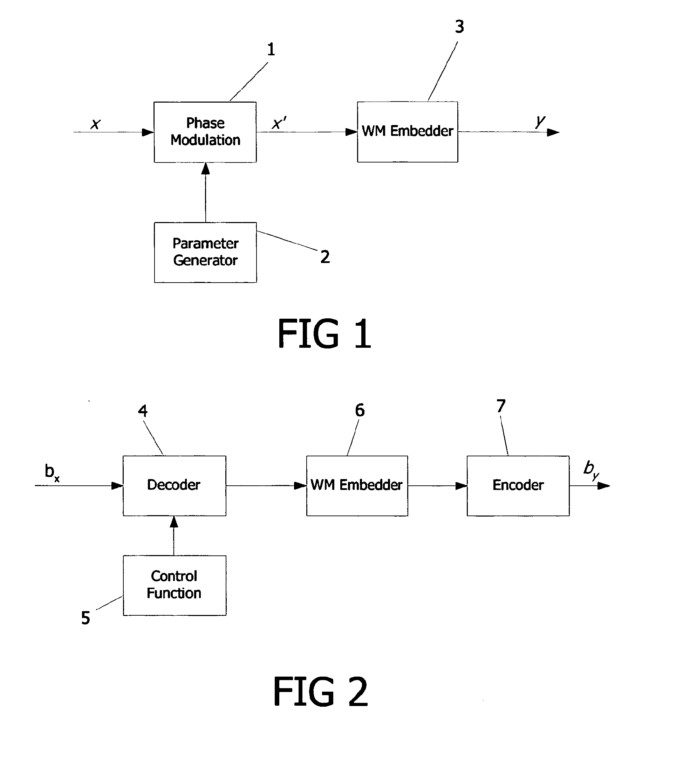

Referring first to Figure 1, a known apparatus for embedding a watermark in a signal is illustrated. A source signal x is input to a phase modulation unit 1, the operation of which is controlled by parameters generated by a parameter generator 2. The phase modulation unit 1 phase modulates the source signal x in accordance with the parameters generated by the parameter generator, and a phase modulated signal x' is output from the phase modulation unit 1.

The phase modulated signal x' output by the phase modulation unit 1 is input to a watermark embedder 3 configured to embed a watermark within the phase modulated signal x'. The embedding of a watermark in a signal is a well known process in the art. An output signal y is output from the watermark embedder 3.

The parameter generator 2 is configured so as to generate a plurality of different sets of parameters for input to the phase modulation unit 1. This means that two identical source signals x may be phase modulated in different ways by the phase modulation unit 1, in dependence upon the parameters received from the parameter generator 2. The parameter generator is configured so as to generate parameters which are such that the phase modulation using the parameters will result in there being, in use, no perceptible difference between the source signal input to the phase modulation unit 1, and the signal output from the phase modulation unit 1. Thus, if the source signal $x$ input to the phase modulation unit 1 is a sound signal the output signal $x'$ will sound, to a listener, identical to the input signal $x$.

However the parameter generator is also configured so as to generate a plurality of sets of parameters which are such that a phase modulated signals generated using different sets of parameters will, when combined together result in highly undesirable artefacts being obtained. Thus, a collusion attack attempting to remove a watermark from a signal will fail given that a plurality of identical source signals having different watermarks cannot be combined together so as to remove the watermark without greatly degrading the source signals.

Figure 2 illustrates an apparatus in accordance with the present invention. The apparatus of Figure 2 is concerned with embedding watermarks within encoded signals, such as compressed domains signals. The apparatus can be used in connection with any encoded signal including compressed domain format signals such as MPEG video, MP3 audio, or Advanced Audio Coding (AAC) audio. It will be readily apparent to one of ordinary skill in the art that the method is equally applicable to other encoded signals.

Referring to Figure 2, an input digital bit stream signal $b_x$ is input to a decoder 4, the decoder 4 being configured to decode the received bit stream to output a baseband signal. The decoder 4 receives a control signal generated by a control function 5. In addition to decoding the received signal $b_x$ the decoder 4 applies phase modulation to the received signal in accordance with the control signal generated by the control function 5. Thus, the signal output by the decoder 4 is both decoded and phase modulated, as will be described in further detail below.

The control function generator 5 operates so as to generate control signals which cause phase modulation such that any attempt to collude multiple signals in an attempt to remove a watermark will result in highly degraded content. Suitable control functions are described in further detail below.

The decoded phase modulated signal output by the decoder 4 is input to a watermark embedder 6 which is configured to embed watermark data within the signal. Embedding of watermarks within signals is well known in the art, and the process of embedding a watermark in a signal is therefore not described in further detail here. The watermark embedder 6 outputs the received signal additionally including a suitable watermark, and this signal is passed to an encoder 7 configured to encode the signal in an appropriate compressed domain format, so as to output a bit stream $b_y$.

In the described embodiment the decoder 4 operates using an Inverse Modified Discrete Cosine Transform (IMDCT), while the encoder 7 operates using a Modified Discrete Cosine Transform (MDCT). These transforms are well known in the art and are used to respectively decode and encode data in the AAC format.

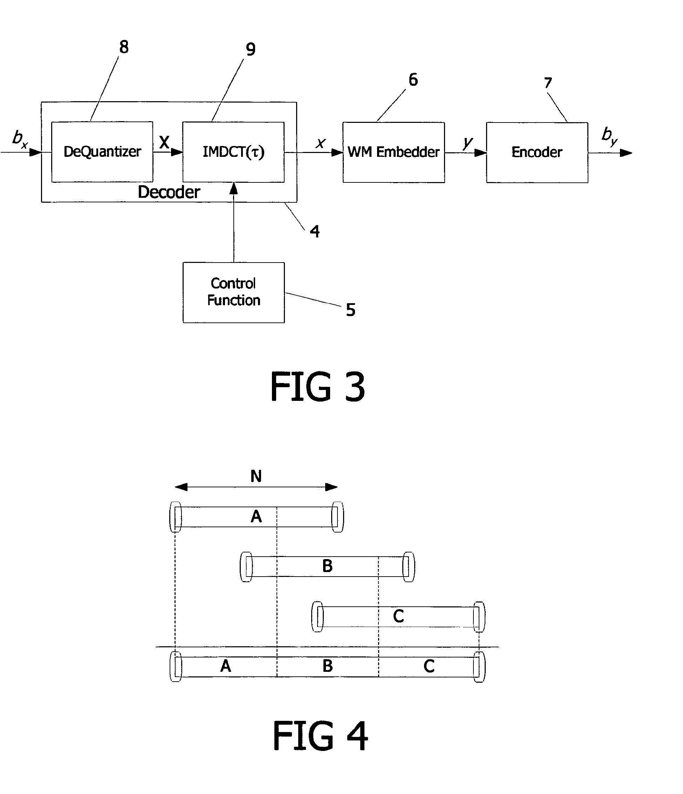

Figure 3 illustrates the apparatus shown in figure 2 in further detail. It can be seen that the decoder 4 comprises a dequantizer 8 and an IMDCT block 9. The watermark embedder 6 and the encoder 7 are as described above with reference to Figure 2.

The dequantizer 8 takes the bit stream $b_x$ and outputs an MDCT coded signal X which is input to the IMDCT block 9. Operation of the dequantizer 8 will be well known to one of ordinary skill in the art, and is not described in further detail here.

The IMDCT is defined by equation (1):

$$x[n] = f[n] \sum_{k=0}^{N/2-1} X[k] \cos\left( \frac{\pi}{2N}\left( 2n+1+\frac{N}{2} \right)(2k+1) \right), \qquad (1)$$

where:
$n = 0,...,N\text{-}1$;
X[k] is the signal output from the dequantizer 8 and is defined for k=1,...,N/2 (i.e. the input encoded signal);

$f[n]$ is a window function such as, for example, $f[n] = \sin\left( \pi \frac{n}{N} \right)$; and

x is the signal output from the IMDCT.

The IMDCT as defined by equation (1) above is, in the apparatus of Figure 3, modified so as to cause an phase modulated output time domain signal x to be generated. That is, the IMDCT block 9 of Figure 3 operates in accordance with equation (2) set out below:

$$x[n-\tau[n]] = f[n-\tau[n]] \sum_{k=o}^{N/2-1} X[k]\cos\left(\frac{\pi}{2N}\left(2n-2\tau[n]+1+\frac{N}{2}\right)(2k+1)\right) \tag{2}$$

where:

n, X[K], and x are as defined with reference to equation (1); and
$\tau[n]$ is a control signal generated by the control function generator 5 and used to cause phase modulation of the output signal.

The control signal $\tau[n]$ is generated using a control function selected such that a phase modulated signal is in use indistinguishable or nearly indistinguishable from the source signal. Additionally, two differently phase modulated signals should, when combined, lead to maximum possible distortion, so as to prevent combination of signals to remove watermarks. One control function capable of achieving these aims is represented by equation (3):

$$\tau[n] = \delta + A\sin(2\pi f_m n + \varphi) \tag{3}$$

where:

$\delta$ is a constant delay;
$A$ is the amplitude to be associated with the modulation;
$f_m$ is the frequency to be associated with the modulation; and
$\varphi$ is the phase shift to be associated with the modulation;

The parameters $A$ and $f_m$ in equation (3) are directly related to audio quality and must therefore be carefully selected. For example, applying modulation as represented by equation (3) to a sine wave with fundamental frequency $f_c$ will introduce frequency components at positions $f_c + n.f_m$, where the components are weighted in accordance with the Bessel functions. If $f_m$ is a low frequency (approximately 1Hz), the energy added by the modulation process will be concentrated around $f_c$ and in audio applications such energy will not be perceptible to a user.

Conversely, the parameter $\varphi$ is simply a change to the starting point of the modulation, and therefore has no effect on audio quality. Thus, the parameter $\varphi$ can be changed freely to generate differently phase modulated signals, without affecting audio quality. Differences between values of the parameter $\varphi$ should however, be large enough to cause distortion when differently phase modulated signals are combined.

It can therefore be seen that the parameters $\delta$, $A$, and $f_m$ will in general remain constant for all operations of the apparatus for Figure 3, while the parameter $\varphi$ will be varied so as to generate different control functions, causing different phase modulations.

Experiments have been carried out using the apparatus shown in Figure 3. An audio signal having a sample frequency of 44.1 kHz was decoded using the decoder 4. The control function 5 was that of equation (3) and configured such that $\delta$ =0, $A$=5, and $f_m$=1Hz. $\varphi$ was varied so as to provide varying control signals to cause different phase modulations. It was concluded that differences between values of the parameter $\varphi$ of more than $\pi/15$ led to poor reconstruction, and therefore good resilience to collusion attacks. Thus, the apparatus of Figure 3 using a control function in accordance with equation (3) can generate 30 differently phase modulated signals from a single source signal. Using any two differently phase modulated signals to remove a watermark, would not provide acceptable results.

It should be noted that if more than 30 phase modulated signals are required to be generated from a single input signal, other parameters used in equation (3) could be varied. However as described above, these parameters must be changed with care so as to ensure that signal quality is not adversely affected.

It should also be noted that the function of equation (3) is simply exemplarily and other functions can be used. Any such function should be smooth enough to avoid audible frequency distortion.

AAC encoding (in common with other similar encodings) operates on a frame basis. This raises various issues during signal processing which will be known to those of ordinary skill in the art. Although boundary effects can be problematic, they occur only at the beginning and end of the encoded signal, and therefore have only limited impact. However, use of the decoder described above, operating in accordance with equation (2) Figure 3 will mean that boundary effects appear at the boundary of each frame, thus generating disadvantageous effects every N/2 samples. This potential problem can be overcome using a method as illustrated in Figure 4.

Here each of the three frames A, B, C has been doubled in length to be N samples long, such that each frame overlaps with another frame. By doing this the first and last samples of each frames need not be used in generation of the reconstructed signal, as is shown in Figure 4.

In preferred embodiments of the invention, only a small phase modulation is applied, meaning that only a few samples will be affected by boundary effects. For example, using a control signal generated by the control function of equation (3), only $(\delta + A)$ samples are affected. Whatever values are selected for $\delta$ and $A$, the number of samples affected will be small relative to the length of the frame (typically, N=2048). Appropriate shaping functions can therefore be used to ensure that boundary samples have an almost negligible effect on signal quality. Accordingly, any artefacts introduced by the phase modulation proposed by the invention will have no perceptible effect on signal quality.

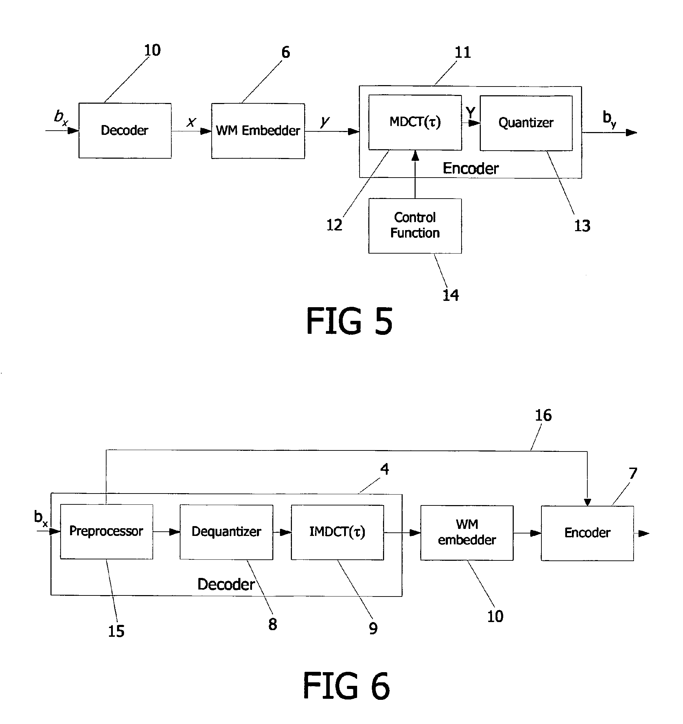

The embodiment of the present invention described above incorporates phase modulation into the operation of the IMDCT so as to generate phase modulated signals in which watermarks can be embedded. An alternative embodiment of the invention is shown in Figure 5. In Figures 2, 3 and 5, like reference numerals are used to refer to equivalent components.

Referring to Figure 5 it can be seen that the illustrated apparatus comprises a decoder 10 which is configured to implement the MDCT as defined by equation (1) above. The decoder 10 receives a bit stream of AAC data and outputs a decoded signal x, which in turn is input to a watermark embedder 6, which functions as described above. The watermark embedder 6 outputs a signal y which is the signal generated by applying a watermark to the received signal x.

The signal y is then input to a encoder 11. The encoder 11 comprises an MDCT block 12 and a quantizer 13. The encoder 11 receives a control signal generated by a control function 14. The MDCT block 12 is configured to apply the MDCT and additionally to apply phase modulation to the input signal.

The MDCT is defined by equation (4):

$$Y[k] = \sum_{n=0}^{N-1} f[n]y[n]\cos\left(\frac{\pi}{2N}\left(2n+1+\frac{N}{2}\right)(2k+1)\right) \tag{4}$$

where:

$$k = 0,...,\frac{N}{2}-1;$$

f[n] is an appropriate window function such as that defined with reference to equation (1);
Y is the signal output from the MDCT; and
y is the signal input to the encoder 11 from the watermark embedder 6.

However, the MDCT block 12 is configured to apply the MDCT using modified coefficients such that the resulting reconstructed time signal is a phase modulated version of the originally encoded signal. Accordingly, operation of the MDCT block 12 is represented by equation (5):

$$Y[k] = \sum_{n=0}^{N-1} f[n]y[n-\tau[n]]\cos\left(\frac{\pi}{2N}\left(2n+1+\frac{N}{2}\right)(2k+1)\right) \tag{5}$$

where:
k, Y, and y are as defined with reference to equation (4); and
$\tau[n]$ is a control signal generated by the control function 14 and used to cause phase modulation of the output signal.

It should be noted that $\tau[n]$ is a slowly varying function and remains almost constant in within one frame. Thus within a value for the function $\tau[n]$ can be replaced with a constant $\tau$.

Now if a variable m is defined as m=n-τ, then equation (5) can be rewritten as:

$$Y[k] = \sum_{m=-\tau}^{N-\tau-1} f[m+\tau]y[m]\cos\left(\frac{\pi}{2N}\left(2m+2\tau+1+\frac{N}{2}\right)(2k+1)\right) \tag{6}$$

The signal Y output from the MDCT block 12 is input to a quantizer 13 configured to generate an output bitstream $b_y$. Operation of the quantizer will be well known to one of ordinary skill in the art.

The embodiment of the invention described above with reference to Figures 2 and 3 and equation (2) applies phase modulation within the decoder. The embodiment of the invention described above with reference to Figure 5 and equations (5) and (6) applies phase modulation within the encoder. It will be appreciated that the phase modulation can be applied by a combination of the decoder and the encoder in some embodiments of the invention.

Figure 6 shows an alternative embodiment of the present invention based upon that illustrated in Figure 3. Here, an input bitstream b$_x$ is again input to the decoder 4. However the decoder 4 includes a further preprocessing module 15 configured to generate data useful for encoding, which is passed directly to the encoder 7 along a line 16. The decoder again comprises a dequantizer 8, and an IMDCT block 9. The preprocessor 5 allows the encoding carried out by the encoder 7 to be carried out more efficiently without the need for optimising bitstream parameters. An implementation of such preprocessing is described in published international patent application WO2004/107316.

This document describes a system in which the pre-processor divides a received bitstream into subsignals, passing only the required subsignals to the watermark embedder, the other subsignals being passed directly from the preprocessor to the encoder. It will be appreciated that such a method greatly increases efficiency.

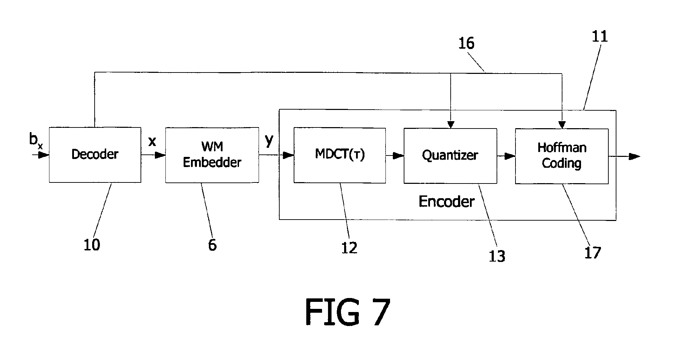

Referring now to Figure 7, there is illustrated an alternative embodiment of the present invention based upon that shown in figure 5. Here, the encoder 11 again comprises an MDCT block 12 and a quantizer 13. However, it can be seen that the quantizer 13 has its operation affected by data received directly from the decoder 16. A Hoffman coding module 17 is also affected by this directly received data. That is, the encoder 11 can encode data more efficiently using the data directly received from the decoder 10.

Although preferred embodiments of the invention have been described above, it will be appreciated that various modifications can be made to these embodiments, without departing from the scope of the attached claims.

The invention is summarized as follows. In watermarking systems, hackers may try to remove the watermark using a so-called collusion attack. If the attacker has access to multiple identical signals with different watermarks (this typically occurs in electronic content delivery systems), simply averaging the signals will remove the watermark energy. A known solution to this problem is phase modulation. By modulating the phase of the signals, the averaging attack will cause phase cancellation to occur and annoying artifacts to be introduced. In the prior art, said phase modulation is carried out in the base-band domain, prior to watermark embedding.

The present invention enables phase modification efficiently to be applied to transform coded signals, in particular DCT or MDCT coded signals such as MP3 or AAC audio signals, or MPEG2 video signals. The bitstream is partially decoded (4) and re-encoded (7). In accordance with the invention, the phase modification is now performed by an appropriately modified version of the forward or inverse (M)DCT transform algorithm (9). The phase modulation is thus an integral part of the decoding process (before watermark embedding) or the encoding process (after watermark embedding), which is very efficient. The phase modulation is controlled by parameters provided by a control function (5).

**Claims**

1. A method for embedding watermark data in a signal encoded in a compressed domain, comprising:

   - receiving said encoded signal ($X$):
   - applying an inverse transform operation (9) to said encoded signal, said inverse transform operation (9) being arranged to transform domain modify said received encoded signal, to form a phase modulated decoded signal (x);
   - embedding watermark data in said phase modulated decoded signal (x); and
   - applying a transform operation to said phase modulated decoded signal in which watermark data has been embedded to generate a signal ($Y$) encoded in said compressed domain.

2. A method according to claim 1, wherein a control signal is used to control said transform domain modifying of said received encoded signal ($X$) to form said phase modulated decoded signal (x).

3. A method according to claim 2, further comprising generating a plurality of control signals using a control function (5), each control signal applying a different transform domain modification to the received signal ($X$) to generate a different phase modulated decoded signal (x).

4. A method according to claim 3, wherein said control function has the form:

$$\tau[n] = \delta + A\sin(2\pi f_m n + \varphi)$$

where: δ is a constant delay;

> - *A* is the amplitude to be associated with the modulation;
> - $f_m$ is the frequency to be associated with the modulation;
> - φ is the phase shift to be associated with the modulation;
> - τ[*n*] is the control signal;
> - n= 0,..., N-1; and
> - N is the number of samples in a frame.

5. A method according to claim 4, wherein a plurality of different control signals are generated by maintaining constant values of δ, *A* and, $f_m$ and varying a value of φ.

6. A method according to any preceding claim further comprising receiving a digital bit stream data ($b_x$), and dequantising said bit stream data to generate said encoded signal (*X*).

7. A method according to any preceding claim, wherein said applying said inverse transform operation (9) comprises applying an inverse discrete cosine transform or an inverse modified discrete cosine transform to the received encoded signal *(X)*.

8. A method according to any preceding claim, further comprising preprocessing said received encoded signal (*X*) to generate intermediate data; and using said intermediate data for said application of said inverse transform operation to said phase modified decoded signal (*y*).

9. A computer readable medium carrying computer readable instructions to cause a computer to carry out a method according to any preceding claim.

10. A method for embedding watermark data in a signal encoded in a compressed domain, comprising:

> - receiving said encoded signal;
> - applying an inverse transform operation to said encoded signal to generate a decoded signal;
> - embedding watermark data in said decoded signal to form a watermarked decoded signal (*y*);
> - applying a transform operation (12) to said watermarked decoded signal (y), said transform operation (12) being arranged to modify said watermarked decoded signal (*y*) in said compressed domain to generate a modified encoded signal (*Y)*, such that applying said inverse transform operation to said modified encoded signal (*Y*) generates a phase modulated version of said watermarked decoded signal.

11. A method according to claim 10, wherein a control signal is used to control said modifying of said received signal (*y*).

12. A method according to claim 11, further comprising generating a plurality of control signals using a control function (14), each control signal applying a different modification to the the received signal (*y*).

13. A method according to any one of claims 10 to 12, wherein said applying said transform operation (12) comprises applying a discrete cosine transform or a modified discrete cosine transform to the received signal (*y*).

14. A computer readable medium carrying computer readable instructions to cause a computer to carry out a method according to any one of claims 10 to 13.

15. Apparatus for embedding watermark data in a signal encoded in a compressed domain, comprising:

> - means for receiving said encoded signal (*X*);
> - means for applying an inverse transform operation (9) to said received encoded signal (*X*), said inverse transform operation (9) being arranged to transform domain modify said received encoded signal (*X*), to form a phase modulated decoded signal (x);
> - means for embedding watermark data in said phase modulated decoded signal (*x*); and
> - means for applying a transform operation to said phase modulated decoded signal in which watermark data has been embedded to generate a signal (*Y*) encoded in said compressed domain

16. Apparatus for embedding watermark data in a signal encoded in a compressed domain, comprising:

- means for receiving said encoded signal;
- means for applying an inverse transform to said encoded signal to generate a decoded signal;
- means for embedding watermark data in said decoded signal to form a watermarked decoded signal;
- means for applying a transform operation (12) to said watermarked decoded signal ($y$), said transform operation (12) arranged to modify said watermarked decoded signal ($y$) in said compressed domain, to generate a modified encoded signal ($Y$) such that application of said inverse transform to said modified encoded signal ($Y$) generates a phase modulated version of said watermarked decoded signal.

**Patentansprüche**

1. Verfahren zum Einbetten von Wasserzeichendaten in ein, in einer komprimierten Domain codiertes Signal, wobei das Verfahren die folgenden Schritte umfasst:

   - Empfangen des codierten Signals ($X$);
   - Anwenden einer inversen Transformationsoperation (9) auf das codierte Signal, wobei die inverse Transformationsoperation so vorgesehen ist, dass eine "Transform-Domain"-Modifizierung des empfangenen, codierten Signals erfolgt, um ein phasenmoduliertes, decodiertes Signal ($x$) zu erzeugen;
   - Einbetten von Wasserzeichendaten in das phasenmodulierte, decodierte Signal ($x$); sowie
   - Anwenden einer Transformationsoperation auf das phasenmodulierte, decodierte Signal, in welches Wasserzeichendaten eingebettet worden sind, um ein in der komprimierten Domain codiertes Signal ($Y$) zu erzeugen.

2. Verfahren nach Anspruch 1, wobei ein Steuersignal zur Steuerung der "Transform-Domain"-Modifizierung des empfangenen, codierten Signals ($X$) eingesetzt wird, um das phasenmodulierte, decodierte Signal ($x$) zu erzeugen.

3. Verfahren nach Anspruch 2, welches weiterhin den Schritt des Erzeugens einer Mehrzahl von Steuersignalen unter Verwendung einer Steuerfunktion (5) umfasst, wobei jedes Steuersignal eine andere "Transform-Domain"-Modifizierung auf das empfangene Signal ($X$) anwendet, um ein anderes phasenmoduliertes, decodiertes Signal ($x$) zu erzeugen.

4. Verfahren nach Anspruch 3, wobei die Steuerfunktion die folgende Form aufweist:

$$\tau[n] = \delta + A\sin(2\pi f_m n + \varphi)$$

   wobei: - $\delta$ eine konstante Verzögerung darstellt;

   - $A$ die der Modulation zuzuordnende Amplitude darstellt;
   - $f_m$ die der Modulation zuzuordnende Frequenz darstellt;
   - $\varphi$ die der Modulation zuzuordnende Phasenverschiebung darstellt;
   - $\tau[n]$ das Steuersignal darstellt;
   - $n = 0,...,N\text{-}1$; und
   - $N$ die Anzahl von Samples in einem Frame darstellt.

5. Verfahren nach Anspruch 4, wobei durch Aufrechterhalten von Konstantwerten von $\delta$, $A$ und $f_m$ sowie Variieren eines Wertes von $\varphi$ eine Mehrzahl von unterschiedlichen Steuersignalen erzeugt wird.

6. Verfahren nach einem der vorangegangenen Ansprüche, welches weiterhin den Schritt des Empfangens von digitalen Bitstrom-Daten ($b_x$) sowie des Dequantisierens der Bitstrom-Daten umfasst, um das codierte Signal ($X$) zu erzeugen.

7. Verfahren nach einem der vorangegangenen Ansprüche, wobei das Anwenden der inversen Transformationsoperation (9) das Anwenden einer inversen, diskreten Cosinus-Transformation oder einer inversen, modifizierten, diskreten Cosinus-Transformation auf das empfangene, codierte Signal ($X$) umfasst.

8. Verfahren nach einem der vorangegangenen Ansprüche, welches weiterhin den Schritt des Vorverarbeitens des empfangenen, codierten Signals ($X$), um Zwischendaten zu erzeugen, sowie des Verwendens der Zwischendaten für das Anwenden der inversen Transformationsoperation auf das phasenmodifizierte, decodierte Signal ($y$) umfasst.

9. Maschinenlesbares Medium, welches maschinenlesbare Befehle überträgt, um zu bewirken, dass ein Computer ein Verfahren nach einem der vorangegangenen Ansprüche ausführt.

10. Verfahren zum Einbetten von Wasserzeichendaten in ein, in einer komprimierten Domain codiertes Signal, wobei das Verfahren die folgenden Schritte umfasst:

- Empfangen des codierten Signals;
- Anwenden einer inversen Transformationsoperation auf das codierte Signal, um ein decodiertes Signal zu erzeugen;
- Einbetten von Wasserzeichendaten in das decodierte Signal, um ein mit einem Wasserzeichen versehenes, decodiertes Signal ($y$) zu erzeugen;
- Anwenden einer Transformationsoperation (12) auf das mit einem Wasserzeichen versehene, decodierte Signal ($y$), wobei die Transformationsoperation (12) so vorgesehen ist, dass das mit einem Wasserzeichen versehene, decodierte Signal ($y$) in der komprimierten Domain modifiziert wird, um ein modifiziertes, codiertes Signal ($Y$) zu erzeugen, so dass durch Anwenden der inversen Transformationsoperation auf das modifizierte, codierte Signal ($Y$) eine phasenmodulierte Version des mit einem Wasserzeichen versehenen, decodierten Signals erzeugt wird.

11. Verfahren nach Anspruch 10, wobei ein Steuersignal zur Steuerung der Modifizierung des empfangenen Signals ($y$) eingesetzt wird.

12. Verfahren nach Anspruch 11, welches weiterhin das Erzeugen einer Mehrzahl von Steuersignalen unter Verwendung einer Steuerfunktion (14) umfasst, wobei jedes Steuersignal eine andere Modifizierung auf das empfangene Signal ($y$) anwendet.

13. Verfahren nach einem der Ansprüche 10 bis 12, wobei das Anwenden der Transformationsoperation (12) das Anwenden einer diskreten Cosinus-Transformation oder einer modifizierten, diskreten Cosinus-Transformation auf das empfangene Signal ($y$) umfasst.

14. Maschinenlesbares Medium, welches maschinenlesbare Befehle überträgt, um zu bewirken, dass ein Computer ein Verfahren nach einem der Ansprüche 10 bis 13 ausführt.

15. Vorrichtung zum Einbetten von mit einem Wasserzeichen versehenen Daten in ein, in einer komprimierten Domain codiertes Signal mit:

- Mitteln zum Empfangen des codierten Signals ($X$);
- Mitteln zum Anwenden einer inversen Transformationsoperation (9) auf das empfangene, codierte Signal ($X$), wobei die inverse Transformationsoperation (9) so vorgesehen ist, dass eine "Transform-Domain"-Modifizierung des empfangenen, codierten Signals ($X$) erfolgt, um ein phasenmoduliertes, decodiertes Signal ($x$) zu erzeugen;
- Mitteln zum Einbetten von Wasserzeichendaten in das phasenmodulierte, decodierte Signal ($x$); sowie
- Mitteln zum Anwenden einer Transformationsoperation auf das phasenmodulierte, decodierte Signal, in welches Wasserzeichendaten eingebettet worden sind, um ein in der komprimierten Domain codiertes Signal ($Y$) zu erzeugen.

16. Vorrichtung zum Einbetten von mit einem Wasserzeichen versehenen Daten in ein, in einer komprimierten Domain codiertes Signal mit:

- Mitteln zum Empfangen des codierten Signals;
- Mitteln zum Anwenden einer inversen Transformation auf das codierte Signal, um ein decodiertes Signal zu erzeugen;
- Mitteln zum Einbetten von Wasserzeichendaten in das decodierte Signal, um ein mit einem Wasserzeichen versehenes, decodiertes Signal zu erzeugen;
- Mitteln zum Anwenden einer Transformationsoperation (12) auf das mit einem Wasserzeichen versehene, decodierte Signal ($y$), wobei die Transformationsoperation (12) so vorgesehen ist, dass das mit einem Wasserzeichen versehene, decodierte Signal ($y$) in der komprimierten Domain modifiziert wird, um ein modifiziertes, codiertes Signal ($Y$) zu erzeugen, so dass durch Anwenden der inversen Transformation auf das modifizierte, codierte Signal (*Y*) eine phasenmodulierte Version des mit einem Wasserzeichen versehenen, decodierten Signals erzeugt wird.

**Revendications**

1.  Procédé pour incorporer des données de filigrane à un signal codé dans un domaine compressé, comprenant les étapes consistant à :

    - recevoir ledit signal codé (X) ;
    - appliquer une opération de transformation inverse (9) audit signal codé, ladite opération de transformation inverse (9) étant agencée pour modifier le domaine de transformation dudit signal codé reçu, pour former un signal décodé à modulation de phase (x) ;
    - incorporer des données de filigrane audit signal décodé à modulation de phase (x) ; et
    - appliquer une opération de transformation audit signal décodé à modulation de phase auquel des données de filigrane ont été incorporées pour générer un signal (Y) codé dans ledit domaine compressé.

2.  Procédé selon la revendication 1, dans lequel un signal de commande est utilisé pour commander ladite modification de domaine de transformation dudit signal codé reçu (X) pour former ledit signal décodé à modulation de phase (x).

3.  Procédé selon la revendication 2, comprenant en outre l'étape consistant à générer une pluralité de signaux de commande en utilisant une fonction de commande (5), chaque signal de commande appliquant une modification de domaine de transformation différente au signal reçu (X) pour générer un signal décodé à modulation de phase différent (x).

4.  Procédé selon la revendication 3, dans lequel ladite fonction de commande a la forme :

$$\tau[n] = \delta + A\,\sin(2\pi f_m n + \varphi)$$

    où : $\delta$ est un délai constant ;

    - A est l'amplitude à associer à la modulation ;
    - $f_m$ est la fréquence à associer à la modulation ;
    - $\varphi$ est le décalage de phase à associer à la modulation ;
    - $\tau[n]$ est le signal de commande ;
    - n = 0, ..., N-1 ; et et
    - N est le nombre d'échantillons dans une trame.

5.  Procédé selon la revendication 4, dans lequel une pluralité de signaux de commande différents sont générés en maintenant des valeurs constantes de $\delta$, A et $f_m$ et en faisant varier une valeur de $\varphi$.

6.  Procédé selon l'une quelconque des revendications précédentes, comprenant en outre l'étape consistant à recevoir des données de flux binaire numérique ($b_x$) et l'étape consistant à déquantifier lesdites données de flux binaire pour générer ledit signal codé (X).

7.  Procédé selon l'une quelconque des revendications précédentes, dans lequel ladite application de ladite opération de transformation inverse (9) comprend l'étape consistant à appliquer une transformation cosinusoïdale discrète inverse ou une transformation cosinusoïdale discrète modifiée inverse au signal codé reçu (X).

8.  Procédé selon l'une quelconque des revendications précédentes, comprenant en outre l'étape consistant à prétraiter ledit signal codé reçu (X) pour générer des données intermédiaires ; et l'étape consistant à utiliser lesdites données intermédiaires pour ladite application de ladite opération de transformation inverse audit signal décodé à modification de phase (y).

9.  Support lisible par ordinateur portant des instructions lisibles par ordinateur pour amener un ordinateur à effectuer un procédé selon l'une quelconque des revendications précédentes.

**10.** Procédé pour incorporer des données de filigrane à un signal codé dans un domaine compressé, comprenant les étapes consistant à :

- recevoir ledit signal codé ;
- appliquer une opération de transformation inverse audit signal codé pour générer un signal décodé ;
- incorporer des données de filigrane audit signal décodé pour former un signal décodé filigrane (y) ;
- appliquer une opération de transformation (12) audit signal décodé filigrané (y), ladite opération de transformation (12) étant agencée pour modifier ledit signal décodé filigrané (y) dans ledit domaine compressé pour générer un signal codé modifié (Y), de sorte que l'application de ladite opération de transformation inverse audit signal codé modifié (Y) génère une version à modulation de phase dudit signal décodé filigrané.

**11.** Procédé selon la revendication 10, dans lequel un signal de commande est utilisé pour commander ladite modification dudit signal reçu (y).

**12.** Procédé selon la revendication 11, comprenant en outre l'étape consistant à générer une pluralité de signaux de commande en utilisant une fonction de commande (14), chaque signal de commande appliquant une modification différente au signal reçu (y).

**13.** Procédé selon l'une quelconque des revendications 10 à 12, dans lequel ladite application de ladite opération de transformation (12) comprend l'étape consistant à appliquer une transformation cosinusoïdale discrète ou une transformation cosinusoïdale discrète modifiée au signal reçu (y).

**14.** Support lisible par ordinateur portant des instructions lisibles par ordinateur pour amener un ordinateur à effectuer un procédé selon l'une quelconque des revendications 10 à 13.

**15.** Appareil pour incorporer des données de filigrane à un signal codé dans un domaine compressé, comprenant :

- des moyens pour recevoir ledit signal codé (X) ;
- des moyens pour appliquer une opération de transformation inverse (9) audit signal codé reçu, ladite opération de transformation inverse (9) étant agencée pour modifier le domaine de transformation dudit signal codé reçu (X), pour former un signal décodé à modulation de phase (x) ;
- des moyens pour incorporer des données de filigrane audit signal décodé à modulation de phase (x) ; et
- des moyens pour appliquer une opération de transformation audit signal décodé à modulation de phase auquel des données de filigrane ont été incorporées pour générer un signal (Y) codé dans ledit domaine compressé.

**16.** Appareil pour incorporer des données de filigrane à un signal codé dans un domaine compressé, comprenant :

- des moyens pour recevoir ledit signal codé ;
- des moyens pour appliquer une transformation inverse audit signal codé pour générer un signal décodé ;
- des moyens pour incorporer des données de filigrane audit signal décodé pour former un signal décodé filigrané ;
- des moyens pour appliquer une opération de transformation (12) audit signal décodé filigrane (y), ladite opération de transformation (12) étant agencée pour modifier ledit signal décodé filigrané (y) dans ledit domaine compressé, pour générer un signal codé modifié (Y) de sorte que l'application de ladite transformation inverse audit signal codé modifié (Y) génère une version à modulation de phase dudit signal décodé filigrané.

FIG 1

FIG 2

FIG 3

FIG 4

FIG 5

FIG 6

FIG 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6145081 A, Winograd

- WO 2004107316 A

**Non-patent literature cited in the description**

- **Alturki, F.** Robust Digital Watermarking using image transform phase modulation. *IEEE,* 2000